# EUROPEAN PATENT SPECIFICATION

(11) **EP 1 443 305 B1**
(45) Date of publication and mention of the grant of the patent: **11.01.2012**
(21) Application number: 04250378.9
(22) Date of filing: 23.01.2004
(51) Int. Cl.: G01C 17/38

(54) **Portable device for indicating specific location and controlling method thereof**
Tragbare Vorrichtung zur Anzeige eines bestimmten Ortes und Steuerungsverfahren dazu
Dispositif portable pour indiquer un emplacement spécifique et méthode de commande pour ceci

(30) Priority: 30.01.2003 KR 2003006419
(43) Date of publication of application: 04.08.2004
(73) Proprietor: SAMSUNG ELECTRONICS CO., LTD., Suwon-city, Gyeonggi-do (KR)
(72) Inventor: Cho, Woo-jong, Suwon-si Gyeonggi-do (KR); Choi, Sang-on, Suwon-si Gyeonggi-do (KR)
(74) Representative: Ertl, Nicholas Justin

(56) References cited:
- US-A- 4 512 667
- US-A- 5 546 310
- US-A- 5 721 713

## Description

### BACKGROUND

The present invention relates to a portable device having a display, and more particularly, to a portable device for indicating a specific location and a controlling method thereof.

1.2 billion Muslims who take about 20% of the global population are subject to five religious duties including i) Shahada (reciting a creed), ii) Salat (praying 5 times a day), iii) Sakat (salvation), iv) Saum (Lamaism abstinence), v) Hajj (pilgrimage). Salat of the five is considered the most significant by Muslims.

Salat is performed in the morning, at midday, between midday and sunset, at sunset and an hour after sunset by praying toward Mecca after purification by taking shoes off, washing the hands and the face.

Mecca is a city of Saudi Arabia having Ka'ba, a sacred place of Muslims. Wherever Muslims are in the world, they pray toward Ka'ba which is their sacred place. Ka'ba has a cubical shape, and each side of it correctly matches directions indicated by a compass.

Therefore, Muslims carry a compass and a map almost all the time.

Meanwhile, portable devices such as mobile phones, personal digital assistance (PDA), laptops, compact disk player (CD player) and MP3 player are now widespread. Especially, portable devices capable of communicating with other devices are steadily researched to be used in various fields and not limited only to communication.

Additionally, as infra structure is built in order that the Internet can be used around the world through portable devices, more and more companies provide Internet services using geographical information system (GIS), global positioning system (GPS), and thereby users can enjoy better quality of life with those diverse services.

However, in spite of development of aforementioned portable devices and such various Internet services, Muslims who are obligated to perform ritual still have the inconvenience of having to carry a compass and a map all the time since they always have to respect the time for the ritual even in the middle of daily work.

Meanwhile, an electronic compass has been introduced. However, this kind of devices indicate only northern direction based on the current location; therefore, it still remains as a problem of carrying a map to find out the direction of Mecca.

US 5 546 310 and US 5 721 713 each disclose a direction indicator apparatus for displaying a relative bearing between a current position and Mecca.

### SUMMARY OF THE INVENTION

According to the present invention, there is provided a portable device as claimed in claim 1.

The invention provides a portable device directing specific locations that users want to know from anywhere of the world and indicating requested directions precisely.

The input unit comprises at least one of a mouse, a touch screen, a key, a keyboard and a microphone.

The second display comprises at least one of a light emitting diode (LED), a speaker and the first display.

The control unit displays a screen for setting up the current city information on the first display when a mode for searching for the direction to the specific location is selected through the input unit. Further, the control unit indicates the direction to the specific location and an orientation of the portable device according to the geographical direction when current city information setup is completed. Alternatively, the control unit stores the setup information after completing the current city information setup, and then indicates the direction to the specific location and the orientation of the portable device through a direction searching process when a user selects the direction searching command from the menu for which is provided as the user selects a direction searching mode for the specific location.

On the other hand, the control unit provides the current city information setup screen with a continent select menu and a major city menu as a submenu to the continent select menu, the major city menu for selecting major cities belonging to the selected continent. The control unit further provides confirmation buttons to complete setup of the current city information to the current city information setup screen.

The invention also provides a method for controlling a portable device for indicating a direction to a specific location comprising the steps of setting up a direction information between major cities of all the nations and specific locations, setting up current city information on a city selected by a user, detecting a geographical direction, and displaying the direction of the device and the direction to the specific locations on a screen of a first display based on the detected geographical direction and a direction information between the set up current city information and the specific locations, upon transmission of the direction searching command.

The direction searching command and the current city information setup are inputted according to an input signal from at least one of a mouse, a touch screen, a key, a keyboard and a microphone.

Additionally, the method for controlling the portable device further comprises the step of generating an alarm when an orientation of the device and the direction to the specific location correspond.

Moreover, the method further comprises the steps of communicating with a setup time informing server connected by network, and generating an alarm, upon being informed of setup time from the setup time informing server and then automatically indicating a direction to the specific location and an orientation of the portable device according to the detected geographical direction.

The step of setting up current city information comprises the step of providing a screen for setting up the current city information when a mode for searching for a direction to the specific location is selected. Further, a screen providing step for setup of the current city information comprises the steps of providing a continent select menu to the current city information setup screen; and providing a major city menu, to the current city information setup screen, as a submenu to the continent select menu, the major city menu for selecting major cities belonging to the selected continent.

According to a second aspect of the invention, there is provided a portable device comprising an input unit to be inputted with a mode and a direction searching command for searching directions of the specific location by a user, a geomagnetic sensor for detecting geographical direction, a data transceiver for communicating with a location information providing server connected by network, a storage unit for storing information on directions between major cities of all the nations and the specific location, a first display showing the direction to the specific location and an orientation of the portable device on a screen, and a control unit for indicating the orientation of the portable device and the direction to the specific location on the display based on the detected geographical direction from the geomagnetic sensor, and the direction information between the current city information supplied from the location information providing server through the transceiver and the specific location stored in the storage unit.

The control unit may generate an alarm, upon being informed of setup time from the setup time informing server through the transceiver, and automatically indicates the direction to the specific location and the orientation of the portable device according to the geographical direction.

The invention also provides a method for controlling a portable device as claimed in claim 9.

The portable device stated above, according to the present invention, indicates an orientation of the device and the direction to the specific location at the user's own good time or setup time, and enables the user aware of more precise direction by alarming according to correspondence of the two directions.

### BRIEF DESCRIPTION OF THE DRAWINGS

These and other features, aspects, and advantages of the present invention will become better understood with regard to the following description, appended claims, and accompanying drawings where:
Fig. 1 is a block diagram of a portable device in accordance with a preferred embodiment of the present invention;
Fig. 2 is a flowchart illustrating an example of operation of the portable device of Fig. 1;
Fig. 3 is a flowchart illustrating another example of operation of the portable device of Fig. 1;
Fig. 4 is a flowchart illustrating yet another example of operation of the portable device of Fig. 1;
Fig. 5 illustrates an example of current city information setup screen of Fig. 2;
Fig. 6 illustrates an example of indicating a direction of specific locations and an orientation of the system through the processes in Fig. 3 or Fig. 4; and
Fig. 7 illustrates an example of indicating a case in which a direction to the specific location and an orientation of the system correspond, as rotating the system.

### DETAILED DESCRIPTION OF THE PREFERRED EMBODIMENTS

A portable device according to the embodiment of the present invention will now be described in detail with reference to the accompanying drawings.

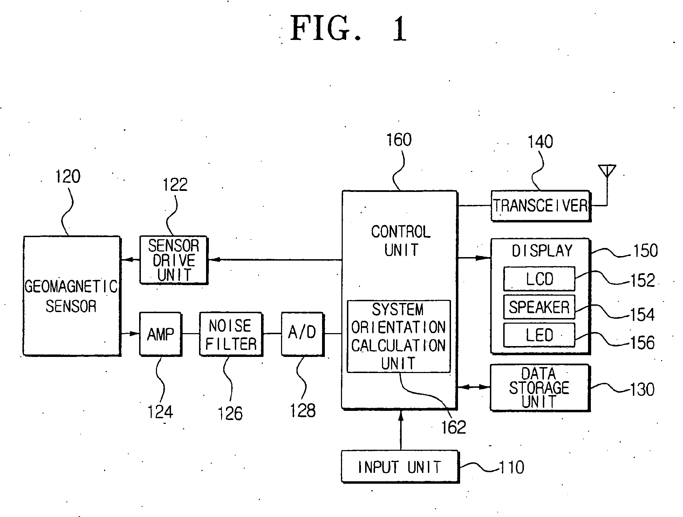

Fig. 1 is a block diagram of the portable device in accordance with one preferred embodiment of the present invention. The device comprises an input unit 110, a geomagnetic sensor 120, a data storage unit 130, a data transceiver 140, a display 150 and a control unit 160. Additionally, the device further comprises a sensor drive unit 122, an amplifier 124, a noise filter 126 and an analogue-to-digital (A/D) converter 128.

The input unit 110 is inputted with a command and optional items selected by a user through an inputting tool. The inputting tool can be at least one of a mouse, a touch screen, a key, a keyboard and a microphone. The microphone enables the user to set up city information of the city where the user is located by an audio signal.

The geomagnetic sensor 120 detects geomagnetic field under the control of the control unit 160. The geomagnetic sensor 120 is driven by the sensor drive unit 122, and the amplifier 124 and the noise filter 126 are used as a noise remover for the detected signal. Further, the analogue digital converter 128 converts analogue signals output through the noise filter 126 into the digital signals.

The data storage unit 130 stores information on a direction between major cities of all the nations and the specific locations such as Mecca.

The data transceiver 140 interchanges data with a base station (not shown) or a low earth orbit-satellite under the control of the control unit 160.

The display 150 comprises a liquid crystal display (LCD) 152, a speaker 154 and a light emitting diode (LED) 156. The LCD 152 displays setting up city information of the city where the user is located under the control of the control unit 160, and further displays a screen for indicating a direction of specific location and an orientation of the system. The speaker 154 generates an alarm when a direction to the specific location and an orientation of the system correspond, for example, by an audio signal. The LED 156 also has a function of notifying when a direction to the specific location and an orientation of the system correspond, by generating an alarm to the user. Additionally, the LCD is also able to generate an alarm by flickering or pop-up sign under the control of the control unit 160. In addition, the display 150 can be a touch screen, by way of an example, which has functions of both input and output. Further, other tools beside an LCD can be adopted to perform a screen display.

The control unit 160 comprises a system orientation calculating unit 162 for calculating an orientation of the system based on the geographical directions detected by the geomagnetic sensor 120, and controls overall functions of the system such as sensing an input, driving the geomagnetic sensor 120 and reading a data from the data storage unit 130.

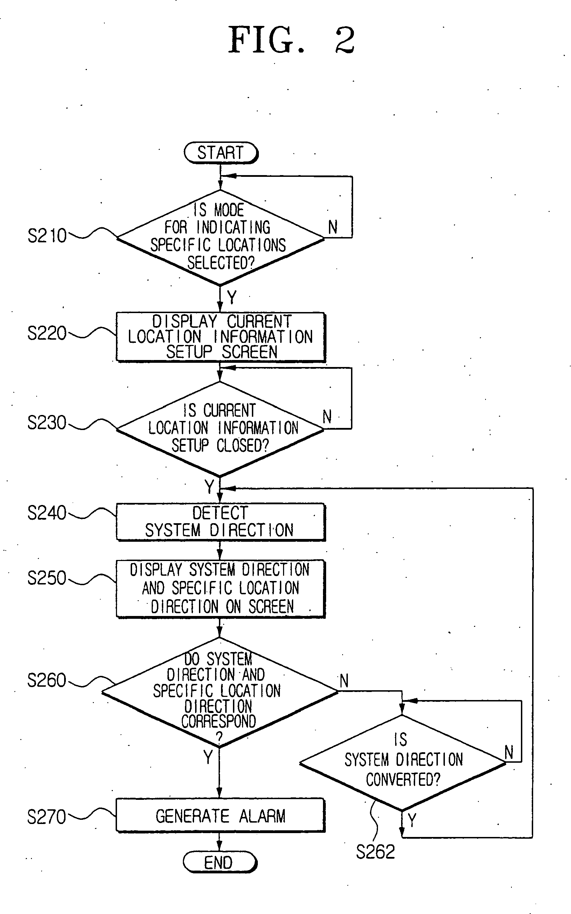

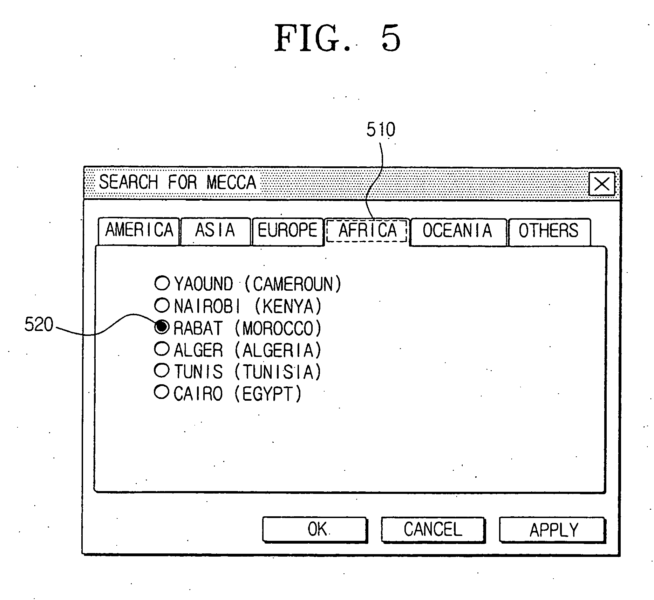

Fig. 2 is a flowchart illustrating an example of operation of the portable device shown in Fig. 1. The user selects a mode for indicating a direction of specific locations through an input unit 110 (S210), and then the control unit 160 displays a current city selection menu on the LCD 152 (S220). Here, as shown in Fig. 5, the current city selection menu provides a continent select menu, and a main city menu as a submenu of a selected continent 510 in the continent select menu. The current city selection menu may further provide confirmation buttons such as an O.K. button, a cancel button and an apply button so that the user can complete the selection, as shown in Fig. 5.

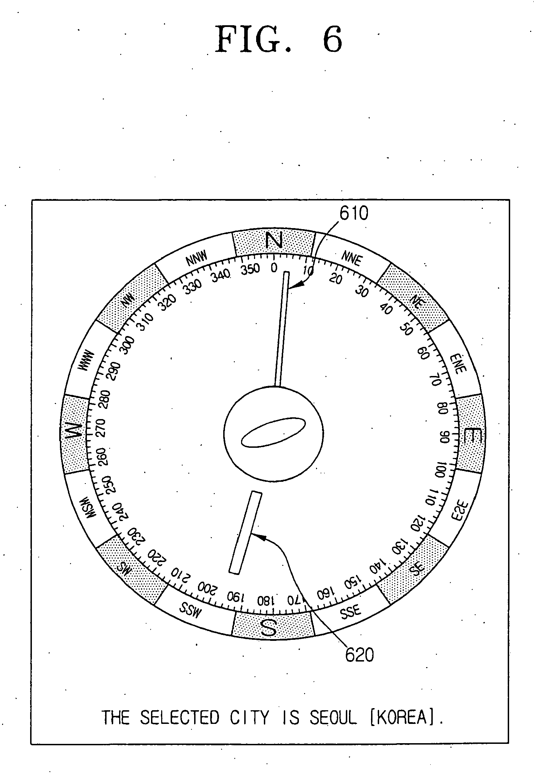

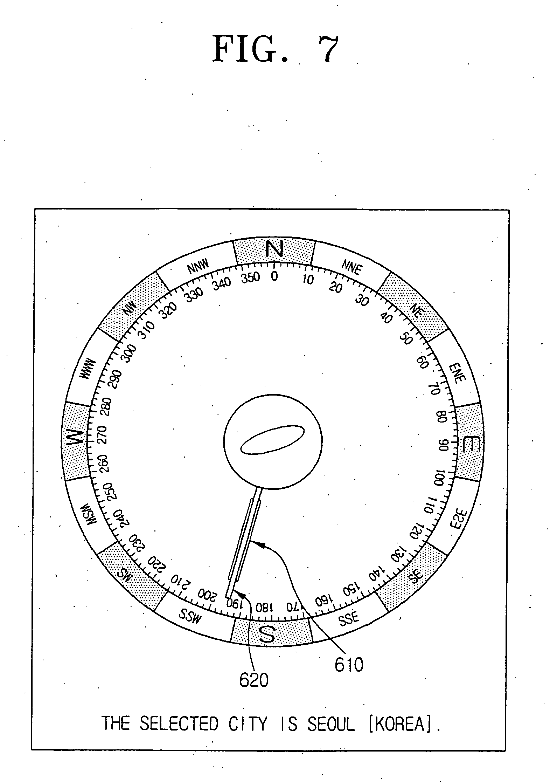

Additionally, when the setup is completed (S230), the control unit 160 detects the geographical direction by driving the geomagnetic sensor 120 with the sensor drive unit 122, and thereby detects the orientation of the system (S240). Further, the control unit 160 reads direction information stored in the data storage unit 130 about the direction information between the current city and a specific location, such as Mecca, and displays orientation of the system and direction to the specific location according to the geographical direction information on a screen, as shown in Fig. 6, through indicators 610, 620 (S250). Fig. 6 further indicates a message regarding a currently selected city. If the user changes the orientation of the system (S262), the control unit 160 accordingly displays the detection results of the varying orientation of the system, and generates an alarm (S270) when the system head on a screen is in a direction to a specific location (S260). Here, various methods such as flickering of an LCD 156 or sound through a speaker 154 can be adopted for the alarm. Besides, flickering of a direction indicator indicating specific directions on an LCD 156 or pop-up windows can serve as an alarm. Fig. 7 shows a case wherein two indicators, one for a system head direction and the other for a specific location, aligned with each other in the same direction.

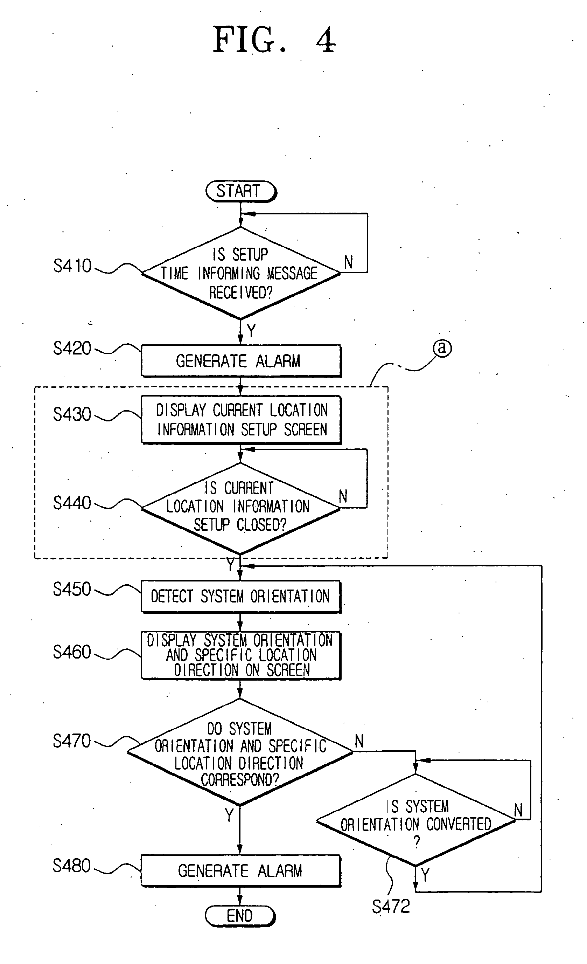

On the other hand, before performing processes of Fig. 2, a portable device according to the present invention is able to generate an alarm upon receiving a setup time informing message from a setup time informing server (not shown) connected to the Internet and indicate a current city information setup screen (Fig. 5) automatically. Fig. 4 is a flowchart illustrating operations when a portable device of Fig. 1 has received a setup time informing message form a setup time informing server through a neighboring base station. Compared to Fig. 2, a process of alarming (S420) according to the result of receiving a setup time informing message (S410) is further included in Fig. 4. Alternatively, a portable device according to the present invention may be designed only to generate an alarm upon receiving a setup time informing message from the setup time informing server connected to the Internet, before performing the processes of Fig. 2. In other words, the device can display a setup screen when the user selects a direction indicating mode for indicating a specific location.

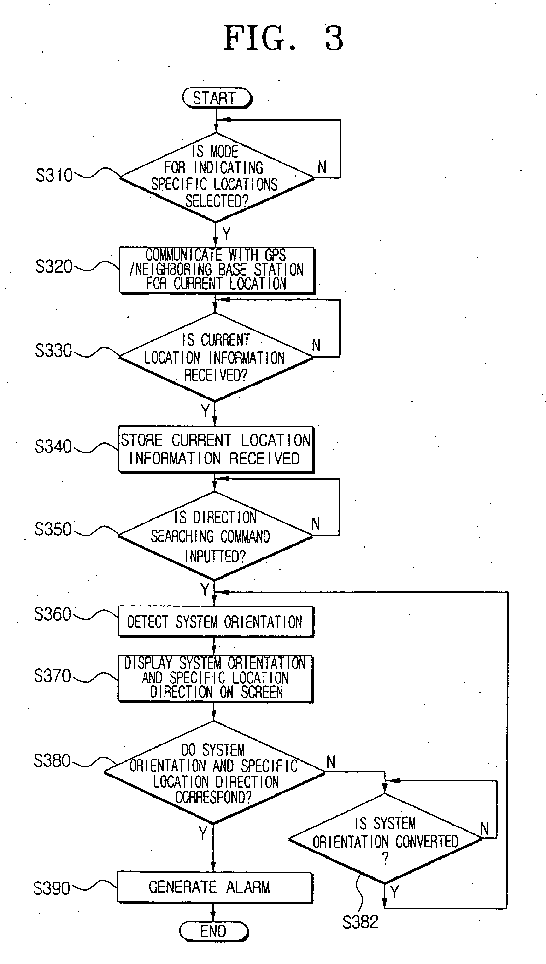

Fig. 3 is a flowchart of another operation method of a portable device of Fig. 1. A mode for indicating a specific location is selected through an input unit 110 (S310). Or, the control unit 160 may automatically communicate with low earth orbit-satellites for GPS or neighboring base stations by a transceiver 140 to inquire about current location information of the system through the location information providing server connected to the Internet (S320). In case of the latter, the process S310 is omitted. Afterward, upon receiving current location information from the location information providing server (S330), the control unit 160 stores the received information (S340). And then, upon receiving a direction searching command through the input unit 110 (S350), the control unit 160, while detecting the geographical direction by driving the geomagnetic sensor 120 with the sensor drive unit 122, reads direction information stored in the data storage unit 130, between a specific location, such as Mecca, and city information acquired by current location information received from the location information providing server (S360), and displays on a screen a system head direction indicator (610) and a specific location direction indicator (620) according to the detected geographical direction information, as shown in Fig. 6 (S370). In Fig. 6, further indicated is a message regarding a currently selected city in the bottom. Here, as the user varies the position of a system (S382), the control unit 160 accordingly displays the detection results of the varying orientation of the system head, and generates an alarm (S390) upon a correspondence between the system head direction indicator 610 and the specific location direction indicator 620 (S280) on a screen. Fig. 7 shows a case wherein two indicators, the system head direction indicator 610 for a system head direction and the specific location direction indicator 620 for a specific location direction, aligned with each other in the same direction.

Meanwhile, before the process of Fig. 3, the control unit 160 performs the processes of Fig. 4 except the process ⓐ. That is, upon receiving a setup time informing message from a setup time informing server connected to the Internet (S410), as shown in Fig. 4, the control unit 160 generates an alarm (S420) and automatically displays an orientation of the system and direction to a specific location through a process of S450 (S460). Fig. 4 further comprises a process of generating an alarm (S420) according to the receipt result of a setup time informing message (S410), but omits the process ⓐ of inputting a direction searching command from the user. The rest of operations are the same as the operations in Fig. 3.

The operations in Fig. 2, applied to the portable device by way of example, are also applicable to the devices for indicating specific locations to the user without particular communicating function. The operation in Fig. 3 can be adopted into a device having a function of communication. In result, a device having a communication function enables itself to provide more various services.

The above portable device and a controlling method thereof can perform functions of generating an alarm at a setup time and precisely indicating a direction to specific locations, such that it can solve existing problems such as anxiety about time, inconvenience of having to use and carry a map or a compass.

Especially, with the above portable device, it is possible to remind Muslims of the 5 times praying on time. Accordingly, they can easily perform the ritual toward the correct direction to Mecca.

While the invention has been shown and described with reference to certain preferred embodiments thereof, it will be understood by those skilled in the art that various changes in form and details may be made therein without departing from the scope of the invention as defined by the appended claims.

## Claims

1. A portable device for indicating a direction to a specific location comprising:
an input unit (110) configured to be inputted with a direction searching command for searching a direction to the specific location;
means for determining user location information;
a geomagnetic sensor (120) for detecting a geographical direction;
a storage unit (130) for storing information on directions between major cities and the specific location;
a first display (152) for showing the direction to the specific location and an orientation of the portable device on a screen;
a control unit (160), upon transmission of the direction searching command from the input unit, for indicating the orientation of a portable device and the direction to the specific location on the first display (152) based on the detected geographical direction from the geomagnetic sensor, and the direction information between the user location and the specific location stored in the storage unit;
**characterised in** the device further comprises:
a second display (156), which is controlled by the control unit (160), for generating an alarm when the orientation of the device and the direction to the specific location are aligned with each other; and
a data transceiver (140) for communicating with a setup time informing server connected by a network, wherein the control unit (160) is configured to generate an alarm through the second display (152), upon being informed of setup time from the setup time informing server through the transceiver, and to automatically indicate the direction to the specific location and the orientation of the portable device according to the geographical direction.

2. The portable device of claim 1, wherein the means for determining user location information comprises the input unit (110) which is configured to be inputted with a current city information setup by a user.

3. The portable device of claim 1, wherein the means for determining user location information comprises the data transceiver (140) for communicating with a location information providing server connected to the Internet which is configured to provide current city information.

4. The portable device of claim 1, 2 or 3, wherein the input unit (110) comprises at least one of a mouse, a touch screen, a key, a keyboard and a microphone.

5. The portable device of claim 1, wherein the second display comprises at least one of a light emitting diode (156), a speaker (154) and the first display (152).

6. The portable device of claim 2, wherein the control unit (160) is configured to display a screen for setting up the current city information on the first display (152) when a mode for searching for the direction to the specific location is selected through the input unit (110).

7. The portable device of claim 6, wherein the control unit (160) is configured to provide the current city information setup screen with a continent select menu and a major city menu for selecting major cities belonging to the selected continent, as a submenu to the continent select menu.

8. The portable device of claim 6 or 7, wherein the control unit (160) is further configured to provide confirmation buttons to the current city information setup screen to complete setup of the current city information.

9. A method for controlling a portable device for indicating a direction to a specific location comprising the steps of:
setting up a direction information about directions between major cities and a specific location;
setting up current city information about a city;
(S240) detecting a geographical direction;
when a direction searching command is transmitted, (S250) displaying the orientation of the device and the direction to the specific location on a screen of a first display based on the detected geographical direction, and the direction information between the set up current city information and the specific location; **characterised in that** the method further comprises:
(S270) generating an alarm when the orientation of the device and the direction to the specific location correspond;
(S410) communicating with a setup time informing server connected by a network; and
when the setup time is informed from the setup time informing server, (S420) generating an alarm, and (S430) automatically indicating a direction to the specific location and an orientation of the portable device according to the detected geographical direction.

10. The method as claimed in claim 9, wherein the current city information is set up by selection by a user.

11. The method as claimed in claim 9, wherein the current city information is set up by communicating (S320) with a location information providing server connected by network.

12. The controlling method of claim 10, wherein the direction searching command and the current city information setup are inputted according to an input signal from at least one of a mouse, a touch screen, a key, a keyboard and a microphone.

13. The controlling method of claim 11, wherein the direction searching command is inputted according to an input signal from at least one of a mouse, a touch screen, a key, a keyboard and a microphone.

14. The controlling method of claim 9, wherein the alarm is generated through at least one of a light emitting diode (156), a speaker (154) and the first display (152).

15. The controlling method of claim 10, wherein a current city information setup step displays a screen for setting up the current city information when a mode for searching for a direction to the specific location is selected.

16. The controlling method of claim 15, wherein a screen providing step for setup of the current city information comprises the steps of:
providing a continent select menu to the current city information setup screen;
and
providing a major city menu, to the current city information setup screen, as a submenu to the continent select menu, the major city menu for selecting major cities belonging to the selected continent.

## Patentansprüche

1. Tragbare Einrichtung zum Anzeigen einer Richtung zu einem spezifischen Ort, umfassend:
eine Eingabeeinheit (110), die konfiguriert ist, um darin einen Richtungssuchbefehl zum Suchen einer Richtung zu dem spezifischen Ort einzugeben;
Mittel zum Bestimmen von Benutzerortsinformationen;
einen geomagnetischen Sensor (120) zum Detektieren einer geographischen Richtung;
eine Speichereinheit (130) zum Speichern von Informationen über Richtungen zwischen Großstädten und dem spezifischen Ort;
ein erstes Display (152) zum Anzeigen der Richtung zum dem spezifischen Ort und einer Orientierung der tragbaren Einrichtung auf einem Schirm;
eine Steuereinheit (160), bei Übertragung des Richtungssuchbefehls von der Eingabeeinheit, zum Anzeigen der Orientierung einer tragbaren Einrichtung und der Richtung zu dem spezifischen Ort auf dem ersten Display (152) auf der Basis der detektierten geographischen Richtung von dem geomagnetischen Sensor und der Richtungsinformationen zwischen dem Benutzerort und dem spezifischen Ort, in der Speichereinheit gespeichert;
**dadurch gekennzeichnet, dass** die Einrichtung weiterhin Folgendes umfasst:
ein zweites Display (156), das von der Steuereinheit (160) gesteuert wird, zum Generieren eines Alarms, wenn die Orientierung der Einrichtung und die Richtung zu dem spezifischen Ort auf einander ausgerichtet sind; und
einen Datensendeempfänger (140) zum Kommunizieren mit einem Einstellzeitinformierungsserver, durch ein Netzwerk verbunden, wobei die Steuereinheit (160) konfiguriert ist zum Generieren eines Alarms durch das zweite Display (152) nach dem Informiertwerden über die Einstellzeit von dem Einstellzeitinformierungsserver durch den Sendeempfänger und zum automatischen Anzeigen der Richtung zu dem spezifischen Ort und der Orientierung der tragbaren Einrichtung gemäß der geographischen Richtung.

2. Tragbare Einrichtung nach Anspruch 1, wobei das Mittel zum Bestimmen von Benutzerortsinformationen die Eingabeeinheit (110) umfasst, die konfiguriert ist, um darin von einem Benutzer eingerichtete aktuelle-Stadt-Informationen einzugeben.

3. Tragbare Einrichtung nach Anspruch 1, wobei das Mittel zum Bestimmen von Benutzerortsinformationen den Datensendeempfänger (140) umfasst zum Kommunizieren mit einem mit dem Internet verbundenen Ortsinformationslieferungsserver, der konfiguriert ist, aktuelle-Stadt-Informationen zu liefern.

4. Tragbare Einrichtung nach Anspruch 1, 2 oder 3, wobei die Eingabeeinheit (110) eine Maus, einen Touchscreen, eine Taste, eine Tastatur und/oder ein Mikrofon umfasst.

5. Tragbare Einrichtung nach Anspruch 1, wobei das zweite Display eine Leuchtdiode (156), einen Lautsprecher (154) und/oder das erste Display (152) umfasst.

6. Tragbare Einrichtung nach Anspruch 2, wobei die Steuereinheit (160) konfiguriert ist zum Anzeigen eines Schirms zum Einrichten der aktuelle-Stadt-Informationen auf dem ersten Display (152), wenn ein Modus zum Suchen nach der Richtung zu dem spezifischen Ort durch die Eingabeeinheit (110) gewählt ist.

7. Tragbare Einrichtung nach Anspruch 6, wobei die Steuereinheit (160) konfiguriert ist zum Bereitstellen des aktuelle-Stadt-Informationen-Einstellschirms mit einem Kontinentwahlmenü und einem Großstadtmenü zum Wählen von zu dem gewählten Kontinent gehörenden Großstädten als ein Untermenü für das Kontinentwahlmenü.

8. Tragbare Einrichtung nach Anspruch 6 oder 7, wobei die Steuereinheit (160) weiterhin konfiguriert ist zum Bereitstellen von Bestätigungsknöpfen zu dem aktuelle-Stadt-Informationen-Einstellschirm, um das Einstellen der aktuelle-Stadt-Informationen abzuschließen.

9. Verfahren zum Steuern einer tragbaren Einrichtung zum Anzeigen einer Richtung zu einem spezifischen Ort, umfassend die folgenden Schritte:
Einstellen von Richtungsinformationen über Richtungen zwischen Großstädten und einem spezifischen Ort;
Einstellen von aktuelle-Stadt-Informationen über eine Stadt;
(S240) Detektieren einer geographischen Richtung;
wenn ein Richtungssuchbefehl übertragen wird, (S250) Anzeigen der Orientierung der Einrichtung und der Richtung zu dem spezifischen Ort auf einem Schirm eines ersten Displays auf der Basis der detektierten geographischen Richtung und der Richtungsinformationen zwischen den eingestellten aktuelle-Stadt-Informationen und dem spezifischen Ort;
**dadurch gekennzeichnet, dass** das Verfahren weiterhin Folgendes umfasst:
(S270) Generieren eines Alarms, wenn die Orientierung der Einrichtung und die Richtung zu dem spezifischen Ort entsprechen;
(S410) Kommunizieren mit einem Einstellzeitinformierungsserver, durch ein Netzwerk verbunden; und
wenn die Einstellzeit von dem Einsteilzeitinformierungsserver informiert wird, (S420) Generieren eines Alarms und (S430) automatisches Anzeigen einer Richtung zu dem spezifischen Ort und einer Orientierung der tragbaren Einrichtung gemäß der detektierten geographischen Richtung.

10. Verfahren nach Anspruch 9, wobei die aktuelle-Stadt-Informationen durch Wahl durch einen Benutzer eingestellt werden.

11. Verfahren nach Anspruch 9, wobei die aktuelle-Stadt-Informationen durch Kommunizieren (S320) mit einem durch ein Netzwerk angeschlossenen Ortsinformationslieferungsserver eingestellt werden.

12. Steuerverfahren nach Anspruch 10, wobei der Richtungssuchbefehl und die aktuelle-Stadt-Informationen-Einstellung gemäß einem Eingangssignal von einer Maus, einem Touchscreen, einer Taste, einer Tastatur und/oder einem Mikrofon eingegeben werden.

13. Steuerverfahren nach Anspruch 11, wobei der Richtungssuchbefehl gemäß einem Eingangssignal von einer Maus, einem Touchscreen, einer Taste, einer Tastatur und/oder einem Mikrofon eingegeben wird.

14. Steuerverfahren nach Anspruch 9, wobei der Alarm durch eine Leuchtdiode (156), einen Lautsprecher (154) und/oder das erste Display (152) generiert wird.

15. Steuerverfahren nach Anspruch 10, wobei ein aktuelle-Stadt-Informationen-Einstellschritt einen Schirm anzeigt zum Einstellen der aktuelle-Stadt-Informationen, wenn ein Modus zum Suchen einer Richtung zu dem spezifischen Ort gewählt ist.

16. Steuerverfahren nach Anspruch 15, wobei ein Schirmbereitstellungsschritt zum Einstellen der aktuelle-Stadt-Informationen die folgenden Schritte umfasst:
Bereitstellen eines Kontinentwahlmenüs für den aktuelle-Stadt-Informationen-Einstellschirm ; und
Bereitstellen eines Großstadtmenüs für den aktuelle-Stadt-Informationen-Einstellschirm als Untermenü für das Kontinentwahlmenü, wobei das Großstadtmenü zum Währen von Großstädten zu dem gewählten Kontinent gehört.

## Revendications

1. Dispositif portable permettant d'indiquer une direction vers un emplacement spécifique comprenant :
une unité d'entrée (110) configurée pour qu'y soit entré un ordre de recherche de direction permettant de rechercher une direction vers l'emplacement spécifique ;
un moyen de déterminer les informations d'emplacement d'utilisateur ;
un capteur géomagnétique (120) pour détecter une direction géographique ;
une unité de stockage (130) pour stocker des informations sur des directions entre des villes principales et l'emplacement spécifique ;
un premier affichage (152) permettant d'afficher la direction vers l'emplacement spécifique et une orientation du dispositif portable sur un écran ;
une unité de commande (160), sur transmission de l'ordre de recherche de direction depuis l'unité d'entrée, permettant d'indiquer l'orientation d'un dispositif portable et la direction vers l'emplacement spécifique sur le premier affichage (152) d'après la direction géographique détectée par le capteur géomagnétique, et les informations de direction entre l'emplacement de l'utilisateur et l'emplacement spécifique stocké dans l'unité de stockage ;
**caractérisé en ce que** le dispositif comprend en outre :
un second affichage (156), qui est commandé par l'unité de commande (160), permettant de générer une alarme quand l'orientation du dispositif et la direction vers l'emplacement spécifique sont alignées l'une sur l'autre ; et
un émetteur-récepteur de données (140) pour communiquer avec un serveur d'informations de temps de configuration connecté par un réseau, dans lequel l'unité de commande (160) est configurée pour générer une alarme via le second affichage (152), lorsqu'elle est informée du temps de configuration par le serveur d'information de temps de configuration via l'émetteur-récepteur, et pour indiquer automatiquement la direction vers l'emplacement spécifique et l'orientation du dispositif portable selon la direction géographique.

2. Dispositif portable selon la revendication 1, dans lequel le moyen pour déterminer les informations d'emplacement d'utilisateur comprend l'unité d'entrée (110) qui est configurée pour qu'y soit entrée la configuration d'informations sur une ville actuelle.

3. Dispositif portable selon la revendication 1, dans lequel le moyen de déterminer les informations d'emplacement de l'utilisateur comprend l'émetteur-récepteur de données (140) permettant de communiquer avec un serveur fournissant des informations d'emplacement connecté à Internet qui est configuré pour fournir des informations sur la ville actuelle.

4. Dispositif portable selon la revendication 1, 2 ou 3, dans lequel l'unité d'entrée (110) comprend au moins un élément parmi une souris, un écran tactile, une clé, un clavier et un microphone.

5. Dispositif portable selon la revendication 1, dans lequel le second affichage comprend au moins un élément parmi une diode électroluminescente (156), un haut-parleur (154) et le premier affichage (152).

6. Dispositif portable selon la revendication 2, dans lequel l'unité de commande (160) est configurée pour afficher un écran permettant de configurer les informations de ville actuelle sur le premier affichage (152) quand un mode de recherche de la direction vers l'emplacement spécifique est sélectionné via l'unité d'entrée (110).

7. Dispositif portable selon la revendication 6, dans lequel l'unité de commande (160) est configurée pour fournir à l'écran de configuration d'informations sur la ville actuelle un menu de sélection de continent et un menu de sélection des villes principales permettant de sélectionner les villes principales situées sur le continent sélectionné, en tant que sous-menu du menu de sélection de continent.

8. Dispositif portable selon la revendication 6 ou 7, dans lequel l'unité de commande (160) est configurée pour fournir en outre des boutons de confirmation à l'écran de configuration d'informations sur la ville actuelle pour compléter la configuration des informations sur la ville actuelle.

9. Procédé de commande d'un dispositif portable permettant d'indiquer une direction vers un emplacement spécifique comprenant les étapes consistant à :
configurer une information de direction concernant des directions entre des villes principales et un emplacement spécifique ;
configurer des informations de ville actuelle concernant une ville ;
(S240) détecter une direction géographique ;
quand un ordre de recherche de direction est transmis, (S250) afficher l'orientation du dispositif et la direction vers l'emplacement spécifique sur un écran d'un premier affichage d'après la direction géographique détectée, et les informations de direction entre les informations de ville actuelle configurées et l'emplacement spécifique ; **caractérisé en ce que** le procédé comprend en outre les étapes consistant à :
(S270) générer une alarme quand l'orientation du dispositif et la direction vers l'emplacement spécifique correspondent ;
(S410) communiquer avec un serveur d'information de temps de configuration connecté par un réseau ; et
quand le temps de configuration est communiqué par le serveur d'information de temps de configuration, (S420) générer une alarme, et (S430) indiquer automatiquement une direction vers l'emplacement spécifique et une orientation du dispositif portable selon la direction géographique détectée.

10. Procédé selon la revendication 9, dans lequel les informations sur la ville actuelle sont configurées par sélection par un utilisateur.

11. Procédé selon la revendication 9, dans lequel les informations sur la ville actuelle sont configurées en communiquant (S320) avec un serveur fournissant des informations d'emplacement connecté par réseau.

12. Procédé de commande selon la revendication 10, dans lequel l'ordre de recherche de direction et la configuration d'informations de ville actuelle sont entrés selon un signal d'entrée provenant d'au moins un élément parmi une souris, un écran tactile, une clé, un clavier et un microphone.

13. Procédé de commande selon la revendication 11, dans lequel l'ordre de recherche de direction est entré selon un signal d'entrée provenant d'au moins un élément parmi une souris, un écran tactile, une clé, un clavier et un microphone.

14. Procédé de commande selon la revendication 9, dans lequel l'alarme est générée via au moins une diode électroluminescente (156), un haut-parleur (154) et le premier affichage (152).

15. Procédé de commande selon la revendication 10, dans lequel une étape de configuration d'informations sur la ville actuelle affiche un écran pour configurer les informations de ville actuelle quand un mode pour rechercher une direction vers l'emplacement spécifique est sélectionné.

16. Procédé de commande selon la revendication 15, dans lequel une étape consistant à fournir un écran pour configurer les informations sur la ville actuelle comprend les étapes consistant à :
fournir un menu de sélection de continent à l'écran de configuration d'informations sur la ville actuelle ; et
fournir à l'écran de configuration d'information de ville actuelle un menu de ville principale, en tant que sous-menu du menu de sélection de continent, le menu de ville principale pour sélectionner les villes principales se trouvant sur le continent sélectionné.
